# EUROPEAN PATENT SPECIFICATION

(11) **EP 0 655 306 B1**
(45) Date of publication and mention of the grant of the patent: **01.12.1999**
(21) Application number: 94117368.4
(22) Date of filing: 03.11.1994
(51) Int. Cl.: B29C 45/16, B29C 45/26, B29C 45/78

(54) **Manufacturing of multi-layer preforms with scrap PET**
Herstellung von mehrschichtigen Vorformlingen mit PET-Abfall
Fabrication de préformes multicouches à déchets de PET

(30) Priority: 03.11.1993 DE 4337494
(43) Date of publication of application: 31.05.1995
(73) Proprietor: Schmalbach-Lubeca AG, 38112 Braunschweig (DE)
(72) Inventor: Tevlin, John, F-59470 Wormhout (FR); Palmer, Peter, Oakfields, Harwich, Essex CO12 5JU (GB)
(74) Representative: Leonhard, Frank Reimund, Dipl.-Ing.

(56) References cited:
- WO-A-86/00563
- WO-A-91/16188
- DE-U- 8 516 054
- GB-A- 2 010 734
- PATENT ABSTRACTS OF JAPAN vol. 14 no. 127 (M-947) [4070] ,9 March 1990 & JP-A-01 320110 (MATSUSHITA ELECTRIC IND CO LTD)
- D.E. GUSTAFSON & W.M. LEBOW 'Model Predictive Control (MPC) of injection molding machines' 11 December 1987 , PROCEEDINGS OF THE 26TH IEEE CONFERENCE ON DECISION AND CONTROL , LOS ANGELES,CA, USA * page 2017 - page 2026; figures 2.1,2.2,A1 *
- PATENT ABSTRACTS OF JAPAN vol. 6 no. 256 (M-179) [1134] ,15 December 1982 & JP-A-57 151307 (YAZAKI KAKOU K.K.)
- PATENT ABSTRACTS OF JAPAN vol. 17 no. 268 (M-1416) ,25 May 1993 & JP-A-05 004262 (MITSUBISHI ELECTRIC CORP)

## Description

The technical field of the invention are the injection moulding machines, which may produce one or a plurality of multi-layer preforms of thermoplastic material to be further manufactured into one-way or multiway-containers, especially PET-bottles; particularly a certain shape of the inner core (pin) of such machinery and a method to improve the thickness distribution of the inner layer of virgin thermoplastic material is addressed by the invention.

A number at layers ("multi-layer") are used for the preform and different thermoplastic melts are successively used and pressed through an injection orifice into a cylindrical cavity. At both surfaces, the outer surface of the inner body and the inner surface of the outer body consolidated layers are established, leaving therebetween enough molten material, through which new molten material of different thermoplastic material may be introduced further up the preform. By such method a multi-layer design is established for the preform, mostly having five layers. Five layers are provided by injecting two different types A,B of the molten thermoplastic material, having the succession A,B,A.
An arrangement with an unround front end of the core pin according to the preamble part of claim 1 is shown in WO-A 91/16188 (Beck), specifically being a concavity or a (full) flattening, as e.g. also shown in GB-A 2,010,734 (Emhart), however having a non semispherical front of the core pin.

**The technical problem** of the invention is to make one of the cylindrical layers from recycled molten material ("post consumer scrap" or "flake") and still guarantee that the inner layer of first injected material is not penetrated and keeps a minimum thickness.

For solving said problem an arrangement is suggested for manufacturing a preform according to the mentioned type and having at its entire inner surface an inner layer with a minimum thickness, which guarantees that the following recycled layer of the multi-layer does not reach near to the inner surface. The arrangement is outlined in claim 1.

Possibly contained detrimental substances in the recycled material may therefore not reach the inner surface of the preform and therefore not the inner surface of a bottle, stretch-blown from said preform. The unround area is symmetrical to the central axis of the elongated core (claim 1) and placed in a half sphere surface of the core pin.

Unround shapes of the front end of the core are a flattening or lower level flattening or a combination made from a ring shaped flattening and a centre dimple.

The invention avoids with such suggestions that the recycled molten material, injected at the front end, opposite of said unround core tip, can reach the inner surface and secures that the recycled layer really stays "a center or outer layer" in the preform, not even touching or coming near the inner surface at the most vulnerable area of the preform during a production process. Providing such unround shape of the core pin, recycled material may contain amounts of contaminants that must not be poisonous but would prevent this recycled material from use at all, since even small amounts of contaminants would exclude such "recycled bottles" from use with food products.

The invention provides that recycled material can be used for the preform and therefore for the stretch-blown container, by which use of recycled material raw material (virgin material) can be saved to make the bottle cheaper but still fully usable in food applications.

The same object is solved by a procedure in which the front ended thinnest zone of the inner layer (in a preform) is moved from the middle axis into a ring zone at the core pin and an operating window of volume percentages is used for the sequentially injected materials (claim 10).

The front ended area of the core forms the base section of the preform, respectively the container; the backwards area corresponds to the closing ("thread") section of the container, in which the cap is placed onto the container.

To prove to a third party that such method with recycled material has been used and that a certain preform definitely incorporates flake (or recycled) material although not seen, the inventions suggests to use thermal monitoring (claim 11). Determining amount, distance and magnitude of peaks of temperatures being measured at the front end of the core, close to the unround front end, in particular in a blind bore opposite the flattening, can be used to provide real proof about the use of flake material for a certain preform (claim 13).

The invention therewith makes use of temperature peaks, arising when introducing molten material for every layer of the preform. Depending on the injected material, the pressure and the layer (manufacturing step) the measured peaks alter.

The rate of rise of the peaks may also be taken into account.

Evaluating a plot of temperature T(t) over time (t) can exactly prove which material has been introduced for which layer of said preform and which time if compared to a model being stored in a computerized hardware (evaluation unit and comparing unit according to claims 12,13).

Besides providing proof for the use of flake material such measurement can be used for quality assurance. The model may be contained as dot-model over time in the evaluation unit.

**Examples** of the invention will be explained in more detail by the help of several embodiments.
**Figure 1** shows the semisphere front 2a of an elongated inner core 2 having a flattening 3b in the front end.
**Figure 2** shows an example of how a multi-layer preform may be manufactured by injecting molten plastics (following the arrow S) in a cylindrical Cavity, In this example five layers are used.
**Figure 3a, 3b, 3c** show several designs of the front end 3b of mentioned core pin 2. **Figure 3b** having a front ended flattening 3b' and a shallow middle-dimple 3a. The radius dimensions are given by D₀ (core pin); D₁ (dimple) and D₂ (flattening). **Figure 3c** shows a hollow core pin with an identation having flat base 3b'' with a diameter of D5 and represents **two** alternatives of transition areas 3d,3e in left hand and right hand sketch (both sides of axis 100). **Figures 3a to 3c** may also be designed as hollow 2c core pins 2 to enable inner cooling.
**Figure 4** is an example of a preform 20 having substantially the same wall-thickness and having its most vulnerable area 14 at the bottom near the orifice 12. The thread part is 13.
**Figure 5** is an example of how the thermal measurement at the front ends 3b,3b',3b'' of the several core pin fronts 2a may be performed.

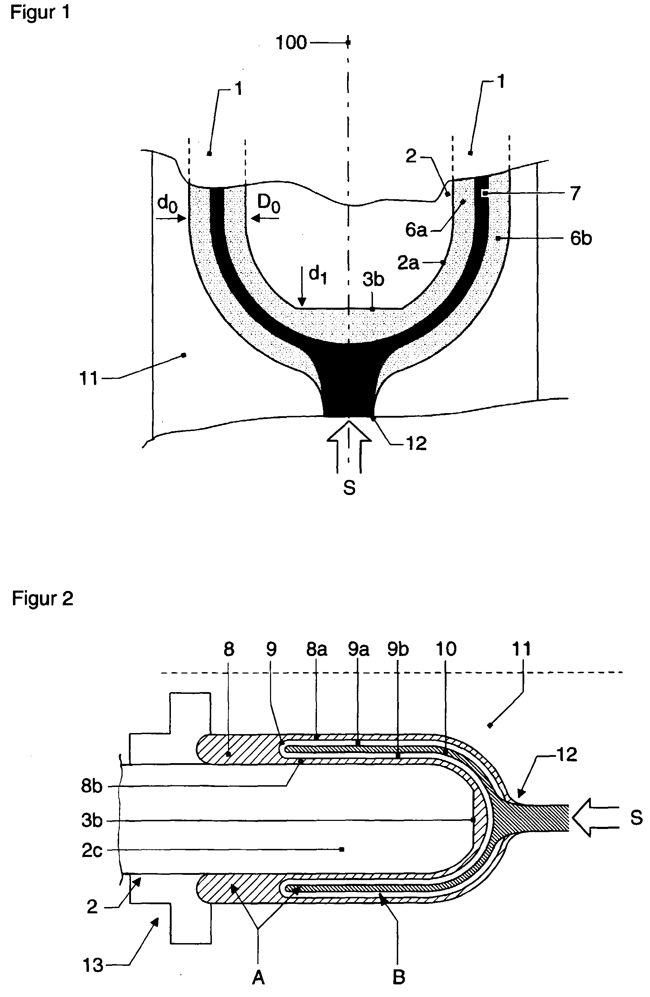

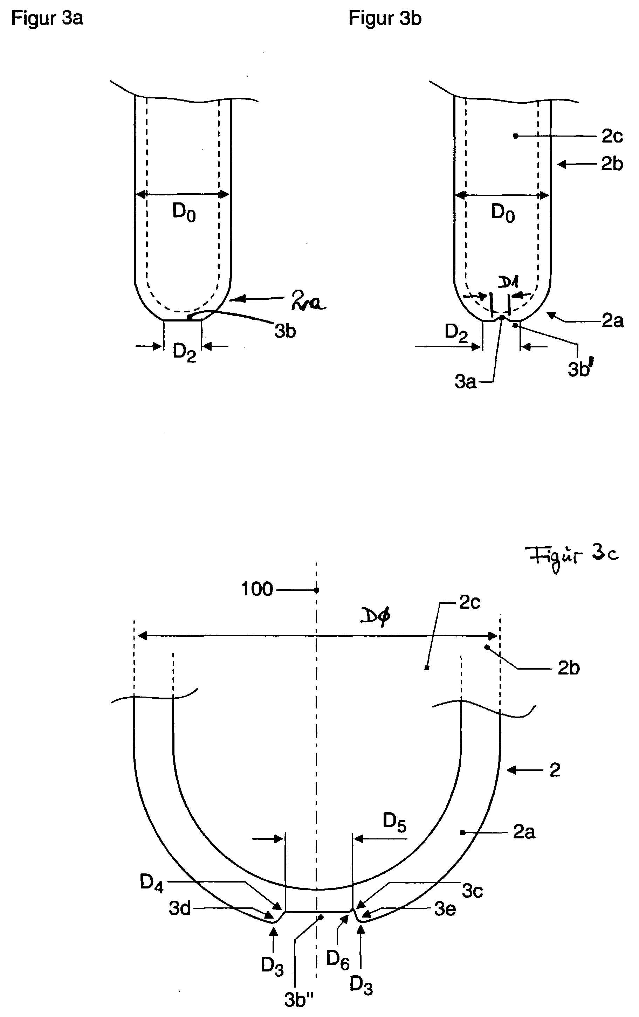

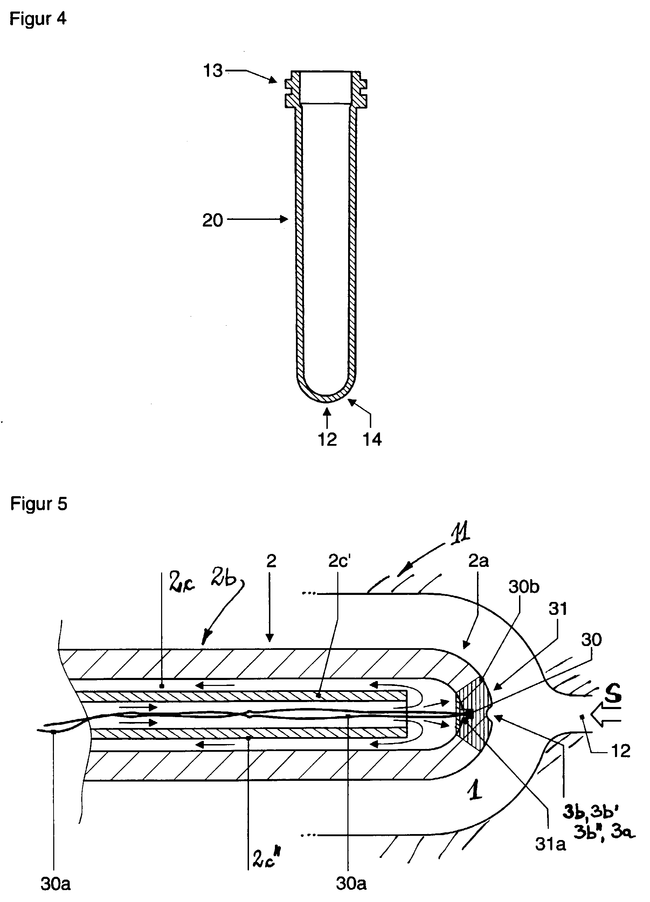

Further examples of how a hollow cylindrical form may be performed and how the orifice may be designed may be taken from state of the art, e.g. **EP-A 392 571** with its figure 1 or with respect to the injecting method its figures 2 and 3, or from **EP-B 186 154** with its figure 4 or figure 5.

Giving a general survey, reference is made to **figure 2**. In said figure the production of a multi-layer preform is depicted schematically, by displaying a section through the corresponding injection mould 11 (outer body) and 2 (core) and by showing how the middle molten layer 10 generally advances in the cavity between core 2 and outer body 11. In the displayed example the advancing layer is the inner layer 10 being of material A, representing the virgin material. Before introducing said virgin material A, the scrap or recycled material B had been introduced through the orifice 12 and advanced through the center of the cavity. Before that, material A (virgin material) had been introduced to form the inner surface 8b and the outer surface 8a of the preform.

The multi-layer preform of **figure 2** is a five-layer preform being only one example of the invention. Also a three-layer preform may be manufactured as well as a two-layer preform.

**In figure 2** the front end 3b of the front 2a of the core pin 2 is designed as will be outlined in more detail in the other figures.

**Figure 1** shows a possible end flattening 3b of the front 2a of the core 2, which projects into the cavity 1 of the mould 11. Mostly, a couple of core pins are projecting into a couple of cavities, arranged close to each other in a larger block 11 being water cooled.

The orifice 12 runs into the cavity 1 at its bottom end near to the front end 3b of the core 2. A central axis 100 is such defined, The orifice 12 usually is in the central axis and fed by two or more pipes, delivering different molten thermoplasts into the cavity.

**Figure 1** shows the second step of manufacturing, namely the introducing of recycled material 7 forming a middle layer in the virgin material A having been introduced before. By advancing the recycled material 7 two layers 6a,6b are defined, one at the inner surface of the outer mould 11 and one at the outer surface of the core 2.

To avoid that recycled material 7 reaches the front 2a of the core being opposite to the injection orifice 12 the front end of the core is flattened 3b, as also shown in figure 3a, having a diameter of D2. The flattening 3b provides that the thinnest region of the inner layer 6a of virgin material A no longer is in the central axis 100 but in a circular area around mentioned central axis. There the inner layer 6a has the thickness of d₁ being thicker than the thickness of the inner layer 6a at the central axis 100 when using a full semi-sphere-shaped core pin.

By such design of the front end of the core the displacement of the thinnest area with respect to place and form is effected (ring-form instead of central circular form and around the central axis instead of in the central axis 100 of the core). The unround design of the front end surface 3b of the core may provide that the thinnest region d₁ of the inner layer is thicker than the thinnest region when using known cores like the core 26 in figure 2 of EP-A 392 571.

**Figure 3b** shows a dimple 3a within a flattening 3b'' at the front end of the core pin.

**Figure 3c** displays a hollow (coolable) core pin 2 with semisphere front portion 2a, back portion 2b and inner coolant space 2c. The front end is designed in two examples, shown left and right hand of the axis, however to be understood as individual fully symmetrical.

The flattening 3b'' has a diameter D₅ and a lower level than the front end and as the pure flattening 3b of figure 1. One intermediate smooth portion 3d may catch up to the outside surface by having two similar or equal radii D₃ and D₄.

Another possible intermediate portion 3c,3e introduces a circular bead D6, reaching even below the base level 3b''.

Practically tested dimensions on a core pin of figures 3a and 3b are D₂=7mm with a core pin diameter D₀=20mm.

**In figure 3b** the diameter D₂ is slightly larger than 7mm and D₁ is slightly smaller than 7mm. Practically tested dimensions are D₁=4mm and D₂=10mm with a core pin diameter of D₀=20mm.

**In figures 2 and 4** the preform 20 after the manufacturing step 2 (still) shows three layers 6a,6b and 7, The middle layer 7 being made from recycled material B. It is neighboured to the inner and outer side by a layer of virgin material A (PET, PEN or polypropylen or nylon 66 or future material with comparable properties) so that material B does not touch the surface of the core pin 2. A danger that a (partly) contaminated inner surface of a preform may harm the food-purity of the containers, stretchblown therefrom, is thus remedied already when producing the preform.

Virgin material can be saved by use of the recycled material without reducing the thickness of the inner securing layer of virgin material. An enlarging of the thickness at the vulnerable zone 14 of the preform 20 (opposite to the injection nozzle) is obtained.

The mentioned "second step" of production is the step displayed in figure 1. In said step the scrap material B is pressed into the cavity and advances within the first material A along the preform to build up three layers 6a,6b and 7.

To clean the nozzle from the scrap material and for preparing the step 1 of the next preform, step 3 (not shown in figur 1) is introduced and advances virgin material A through nozzle 12 again, The advance of said material A may, however, be short and only within the region of the front end of the core or may split up the recycled material 7 at the bottom of the preform into two recycled layers 9a,9b as shown in figure 2.

The shape of the recycled layer 7 is therefore only depending on the volume of the virgin material introduced into the orifice-area 12 during step three.

It will be evident that instead of using three layers 6a,7,6b in figur 1 only two layers 6a,7 may be used, the multi-layer preform then having an outer recycled layer. Equally, it is possible to use more than three layers, for instance, five layers as shown in figure 2.

The main benefits of the third injection of virgin material A as being the third step of the manufacturing process of the preform is the purifying of the orifice 12. By such third step it is avoided that mixtures between material A and material B whithin the area of the orifice 12 are established. By such mixtures the recycled material would in lower concentration but still in a concentration large enough to harm the food-compatibility of the preform arrive at the inner surface.

During tests the percentage of volume of a preform containing recycled material was placed into an operating window to give secure food-compatibility, Such operating window requires that material A as being the first layer should not be below about 45%, when material B is introduced with about 25% of volume.

| material A | material B | material A |
|---|---|---|
| 45 % | 25 % | 30 % |
| to | to | to |
| 60 % | 25 % | 15 % |

If the operating window is neglected and virgin material A is introduced below 45% of volume, a danger arises that the scrap material introduced afterwards will reach either at the top 13 of the preform (near the thread) or at the bottom 14 of the preform 20 the surface of the core 2.

If material B as scrap material is introduced to a larger extent than 25% it may also be too much of volume, introducing the danger mentioned before. If the amount of introduced material B, however, is substantially below 25% of volume, it will have only little bonding effect and the multiple layers may delaminate.

The injection process of the third step of manufacturing should introduce a volume of virgin material not below 15%. By introducing said amount of virgin material three objects are achieved. Mainly, the nozzle 12 is cleared from scrap material B for providing a start condition for the next preform, which starts with introducing virgin material A. A further object of the third manufacturing step is the advancing of the first A-layer up to the thread-zone 13 of the preform to be on the safe side that the scrap material does not reach the surface on the threaded end and the virgin material A is safely within the whole thread-area. Finally, the third step of introducing virgin material is to dilute the bottom B-layer and advance the layer B further into the preform.

The injection time depends on the pressure and the temperature. It also depends on the flattening or dimple shown in sketch in figure 3a, 3b, 3c. A test showed that satisfying results are obtained, when:

| material: | injection time: | temperature T: |
|---|---|---|
| material A | approx. 1,5 sec | at 280 °C |
| material B | approx. 1 sec | at 280 °C |
| material A | approx. 1,3 sec | at 280 °C. |

With said injection time and injection temperatures no erosion or melting of the established (cooled) A-layer 6a resulted, when hot material B entered through the orifice 12.

**Figure 5** is a sketch of a water cooled core pin having a hollow space 2c and being cooled by turbulent water flow through a fountain cooling 2c',2c'' (arrows indicate water flow). The front end carries a section 31, which is made from copper. Around the central axis 100 the copper 31 has a flattening 3b. From the inside of the core pin 2 there is introduced a thermocouple 30 within a blind bore 31a. The thermocouple 30 is connected to a printer or plotter via a lead 30a.

The length of the blind bore 31a is designed such that the thermocouple 30 will reach as close as possible to the bottom of the flattening 3b. In tests a suitable distance between the bottom of the flattening 3b and the end of the blind bore 31a has been evaluated to be 1.5mm. The inside surface of the inset or section 31 is thoroughly insulated with a thermally blocking cover 30b, to keep coolant effects off the measuring thermocouple end 30. In alternate embodiment the section 31 is reasonably isolated at its border surface to the remaining core.

A temperature versus time plot T (t) shows peaks of the temperature, measured by the thermocouple 30 in figure 5. The peaks correspond to the input pressures and input temperatures of the hot (molten) thermoplast, introduced through the orifice 12 onto the front 2a of the core pin 2.

By evaluating the peaks, which constantly decay from manufacturing step to manufacturing step, one is able to prove that a certain material has been used at a certain stage of the manufacturing process.

For such evaluation a model is used within a not displayed unit to provide a reference model of how the temperature versus time should look like if a proper preform is produced. If the measured temperature at the thermocouple 30 deviates significantly from this model, one is able to tell that either quality has to be improved or that certain defects are within the amounts of molten material introduced into the cavity.

Said plot or said evaluation of said peaks from mentioned plot are unconceivable proof to third parties that proper preforms had been manufactured and recycled material has been used within said preform but properly enclosed within layers of virgin material.

The temperature measuring also enables to tell about a certain time, e.g. material A was introduced at a certain temperature to determine when the minimum volume (e.g. 45%) being necessary for a consolidated inner A-layer 6a is introduced.

## Claims

1. **Arrangement** for manufacturing a preform from a thermoplastic melt, such as PET, PEN or polypropylen, for being further manufactured into a plastic container, especially a PET- or PEN-bottle, comprising
- an elongated cylindrical space (1) in which an elongated cylindrical core pin (2) having a front and a back portion (2a,2b) and an outer diameter (D0) being reduced compared to the inner diameter (d0) of the cylindrical space (1) is provided, such that between the inner surface of the cylindrical space (1) and the outer surface (D0) of the core pin (2) essentially the same distance (d0-D0) is provided over a large area including the area of the front portion (2a) of the core pin (2), the front portion (2a) of said core pin (2) being semispherical and having a front end surface being designed symmetrical with respect to the central axis (100) but un-round (3b,3b',3b'';3c,3d,3e); *characterized in that*
- the un-round front end surface (3b,3b',3b'';3c,3d,3e) comprises a ring zone flattening (3b') or an axially backwards oriented centre flattening (3b,3b''), the flattening (3b',3b,3b'') being oriented perpendicular to the central axis (100).

2. Arrangement according to claim 1, the ring zone flattening (3b') having a centered and backwards oriented shallow indentation (3a), in particular a dimple.

3. Arrangement according to claim 1, having a backwards oriented centre flattening as a base (3b'';D₅), being at a lower level than a remaining semisphere front of the core pin (2) and having
(a) a smooth transition (D₃,D₄;3d) towards the remainder of the semisphere front (2a); or
(b) an annular groove (3c;D₆) arranged between a smoth transition section (D3;3e) and the base (3b'';D₅) and having a lower level than the base (3b'').

4. Arrangement according to claims 2 or 3, in which the radius (D₀/2) of the core pin front portion (2a) is large compared to the radius (D₁/2,D₂/2,D₅/2) of the shallow indentation (3a) or flattening (3b',3b,3b''), oriented backwards.

5. Arrangement according to claims 2 or 4, in which the shallow indentation (3a) has a smaller radial extension (D₁/2) than the ring zone flattening (3b').

6. Arrangement according to claim 5, in which the un-round front end extends in radial direction (D₁,D₂) up to no more than 1/4 to 1/2 of the radius (D₀/2) of the front sphere portion of the core pin (2), but is only small in axial (100) direction.

7. Arrangement according to any one of claims 1 to 6, in which
(a) a thermal detector (30,30a) is coupled to the front end portion (2a) of the inner core pin (2;2a,2b) having a measuring section (30) introduced near to the un-round outer surface (3b,3b'3b'') of the front end portion (2a);
(b) at least a central part (31) of the front end portion (2a) of the core-pin (2) is made from metal of high thermal conductivity, such as copper, silver or an alloy.

8. Arrangement according to claim 7, characterized in that the thermal detector (30,30a) is constantly coupled to a long-term printing or plotting device for printing or plotting the temperature (T) over time (t) during moulding of the preforms (20).

9. Arrangement according to claims 7 or 8, having an evaluation unit coupled to temperature data from said thermal detector (30,30a) to detect peaks (40a,40b) of the temperature data over time, the time intervals between said peaks (40a,40b) and the number of peaks for one moulding process of one preform, and having a comparison unit for comparing the temperature data with model-data contained in the evaluation unit.

10. **Method** for manufacturing a plastic preform, in which through an injection orifice (12) at least three thermoplastic melts (8,9,10; A,B,A) are sequentially injected into a hollow cylindrical ring-space (1) having a ring-space volume between a core pin (2;2a,2b) and the inner wall of an outer form (11) and the zone of smallest thickness (d₁) of the plastic layer (6a) neighbouring the outer surface of the core pin (2;2a,2b) is displaced away from the central axis (100) of the core pin (2) into a ring-shaped zone around the central axis (100), *characterized in that* an operating window of volumes of the sequentially injected thermoplastic melts (A,B,A) is defined, to secure food compatibility of a container blown from said plastics preform;
the operating window comprising injecting a first volume of virgin material (A) being not less than 45% of said ring-space volume prior to injecting a first volume of recycled material (B) substantially being 25% of said ring-space volume and then injecting a second volume of virgin material (A) being not less than 15% of said ring-space volume.

## Patentansprüche

1. **Anordnung** zur Herstellung eines Vorformlings (Preform) aus einer Thermoplastschmelze, wie PET, PEN oder Polypropylen, zur weiteren Verarbeitung zu einem Kunststoffbehälter, insbesondere zu einer PET- oder PEN-Flasche, umfassend
- einen länglichen zylindrischen Raum (1), in dem ein länglicher zylindrischer Kern oder Kernstift (2) angeordnet ist, der einen vorderen und einen hinteren Abschnitt (2a, 2b) und einen Außendurchmesser (D0) aufweist, weicher im Vergleich zum Innendurchmesser (d0) des zylindrischen Raums (1) reduziert ist, so daß zwischen der Innenfläche des zylindrischen Raums (1) und der Außenfläche (D0) des Kerns oder Kernstifts (2) über eine große Fläche einschließlich der Fläche des vorderen Abschnitts (2a) des Kerns(tifts) (2) im wesentlichen derselbe Abstand (d0-D0) vorliegt, wobei der vordere Abschnitt (2a) des Kerns (2) halbkugelförmig ist und eine vordere Endfläche aufweist, die in bezug auf die Mittelachse (100) symmetrisch, jedoch unrund (3b, 3b', 3b''; 3c, 3d, 3e) ausgeführt ist, *dadurch gekennzeichnet, daß*
- die unrunde vordere Endfläche (3b, 3b', 3b''; 3c, 3d, 3e) eine Ringbereichsabflachung (3b') oder eine axial nach hinten ausgerichtete, mittige Abflachung (3b, 3b'') aufweist, wobei die Abflachung (3b', 3b, 3'') senkrecht zur Mittelachse (100) ausgerichtet ist.

2. Anordnung nach Anspruch 1, wobei die Ringbereichsabflachung (3b') eine zentrierte und nach hinten ausgerichtete, flache Vertiefung (3a), insbesondere eine Einbuchtung, aufweist.

3. Anordnung nach Anspruch 1, die eine nach hinten ausgerichtete, mittige Abflachung als Basis (3b''; D₅) aufweist, die tiefer liegt als eine verbleibende halbkugelförmige Stirnfläche des Kernstifts (2), ferner umfassend
(a) einen abgerundeten Übergangsbereich (D₃, D₄; 3d) in Richtung des Rests der halbkugelförmigen Stirnfläche (2a); oder
(b) eine ringförmige Rille (3c; D₆), die zwischen einem abgerundeten Übergangsbereich (D3; 3e) und der Basis (3b''; D₅) angeordnet ist und tiefer als die Basis (3b'') liegt.

4. Anordnung nach Anspruch 2 oder 3, wobei der Radius (D₀/2) des vorderen Abschnitts (2a) des Kernstifts im Vergleich zu dem Radius (D₁/2, D₂/2, D₅/2) der flachen Vertiefung (3a) oder der nach hinten ausgerichteten Abflachung (3b', 3b, 3b'') groß ist.

5. Anordnung nach Anspruch 2 oder 4, wobei die flache Vertiefung (3a) eine geringere radiale Erstreckung (D₁/2) als die Ringbereichsabflachung (3b') hat.

6. Anordnung nach Anspruch 5, wobei sich das unrunde vordere Ende in radialer Richtung (D₁, D₂) maximal 1/4 bis zu 1/2 des Radius (D₀/2) des vorderen Kugelabschnitts des Kernstifts (2) erstreckt, jedoch in axialer (100) Richtung klein ist.

7. Anordnung nach einem der Ansprüche 1 bis 6, wobei
(a) ein Wärmedetektor (30, 30a) mit dem vorderen Endabschnitt (2a) des inneren Kernstifts (2; 2a, 2b) verbunden ist, der einen Meßbereich (30) aufweist, der nahe der unrunden Außenfläche (3b, 3b', 3b'') des vorderen Endabschnitts (2a) eingeführt ist;
(b) zumindest ein mittlerer Teil (31) des vorderen Endabschnitts (2a) des Kernstifts (2) aus einem Metall mit hoher thermischer Leitfähigkeit, wie etwa Kupfer, Silver oder einer Legierung, gefertigt ist.

8. Anordnung nach Anspruch 7, *dadurch gekennzeichnet, daß* der Wärmedetektor (30, 30a) beständig mit einer Langzeit-Druck- oder Zeicheneinrichtung verbunden ist, um die Temperatur (T) über die Zeit (t) während des Formens des Vorformlings (20) auszudrucken oder grafisch darzustellen.

9. Anordnung nach Anspruch 7 oder 8, die eine Bewertungseinheit, die mit Temperaturdaten von dem Wärmedetektor (30 30a) in Verbindung steht, um Spitzenwerte (40a, 40b) der Temperaturdaten über die Zeit, die Zeitabstände zwischen diesen Spitzenwerten (40a, 40b) sowie die Anzahl der Spitzenwerte für ein Formverfahren eines Vorformlings zu ermitteln, und eine Vergleichseinheit zum Vergleichen der Temperaturdaten mit in der Bewertungseinheit enthaltenen Musterdaten, aufweist.

10. **Verfahren** zur Herstellung eines Kunststoffvorformlings, bel dem durch eine Einspritzöffnung (12) zumindest drei Thermoplastschmelzen (8, 9, 10; A, B, A) nacheinander in einen hohlen zylindrischen Ringraum (1) eingespritzt werden, der ein Ringraumvolumen zwischen einem Kern oder Kernstift (2; 2a, 2b) und der Innenwand einer äußeren Form (11) hat, wobei der Bereich mit der geringsten Dicke (d₁) der Kunststoffschicht (6a), benachbart der Außenfläche des Kernstifts (2; 2a, 2b), von der Mittelachse (100) des Kerns(tifts) (2) in einen ringförmigen Bereich um die Mittelachse (100) verschoben ist, *dadurch gekennzeichnet, daß* ein Betriebsfenster der von Volumina nacheinander eingespritzter Thermoplastschmelzen (A, B, A) definiert ist, um die Lebensmittelverträglichkeit eines aus diesem Kunststoffvorformling geblasenen Behälters zu gewährleisten; wobei das Betriebsfenster umfaßt:
Das Einspritzen einer ersten Menge ungebrauchten (virgin) Materials (A), die mindestens 45 % des Ringraumvolumens beträgt, vor dem Einspritzen einer ersten Menge recycelten (scrap) Materials (B), weiche im wesentlichen 25 % des Ringraumvolumens beträgt, und anschließendes Einspritzen einer zweiten Menge ungebrauchten Materials (A), die mindestens 15 % des Ringraumvolumens beträgt.

## Revendications

1. Dispositif destiné a la fabrication d'une préforme à partir d'une coulée de matière thermoplastique, telle que du PET, du PEN ou du polypropylène, pour une transformation suivante en un récipient en matière plastique, notamment une bouteille en PET ou en PEN, comprenant
- un espace cylindrique allongé (1), dans lequel est prévu un mandrin formant noyau (2), cylindrique et allongé, présentant des parties avant et arrière (2a, 2b) et un diamètre extérieur (D0) réduit par rapport au diamètre intérieur (d0) de l'espace cylindrique (1), de telle manière qu'existe, sur une grande superficie, comprenant la zone de la partie avant (2a) du mandrin formant noyau (2), globalement la même distance (d0-D0) entre la surface interne de l'espace cylindrique (1) et la surface externe (D0) du mandrin formant noyau (2), la partie avant (2a) dudit mandrin formant noyau (2) étant hémisphérique et présentant une surface d'extrémité avant qui est conçue symétrique par rapport à l'axe central (100) mais non arrondie (3b, 3b', 3b'' ; 3c, 3d, 3e), *caractérisé en ce que*
- la surface d'extrémité avant non arrondie (3b, 3b', 3b'' ; 3c, 3d, 3e) comprend un aplatissement de zone annulaire (3b') ou un aplatissement central (3b, 3b'') orienté axialement vers l'arrière, l'aplatissement (3b', 3b, 3b'') étant orienté perpendiculairement à l'axe central (100).

2. Dispositif selon la revendication 1, l'aplatissement de zone annulaire (3b') ayant une entaille peu profonde (3a) centrale et orientée vers l'arrière, notamment un petit creux.

3. Dispositif selon la revendication 1, comportant un aplatissement central orienté vers l'arrière, en tant que base (3b'' ; D₅), qui est à un niveau intérieur à celui du restant de l'avant hémisphérique du mandrin formant noyau (2), et qui présente
(a) une transition douce (D₃, D₄ ; 3d) en direction du restant de l'avant hémisphérique (2a) ; ou
(b) une rainure annulaire (3c ; D₆), disposée entre une partie formant transition douce (D3 ; 3e) et la base (3b'' ; D₅) et ayant un niveau inférieur à celui de la base (3b'').

4. Dispositif selon la revendication 2 ou 3, dans lequel le rayon (D₀/2) de la partie avant (2a) du mandrin formant noyau est grand par rapport au rayon (D₁/2, D₂/2, D₅/2) de l'entaille peu profonde (3a) ou de l'aplatissement (3b', 3b, 3b''), orientés vers l'arrière.

5. Dispositif selon la revendication 2 ou 4, dans lequel l'entaille peu profonde (3a) a une plus petite étendue radiale (D₁/2) que l'aplatissement de zone annulaire (3b').

6. Dispositif selon la revendication 5, dans lequel l'extrémité avant non arrondie s'étend dans le sens radial (D₁, D₂) sur une distance ne représentant pas plus que 1/4 à 1/2 du rayon (D₀/2) de la partie hémisphérique avant du mandrin formant noyau (2), mais n'est que petite dans le sens axial (100).

7. Dispositif selon l'une quelconque des revendications 1 à 6, dans lequel
(a) un détecteur thermique (30, 30a) est relié à la partie d'extrémité avant (2a) du mandrin formant noyau (2 ; 2a, 2b), ayant une partie de mesure (30) introduite à proximité de la surface externe non arrondie (3b, 3b', 3b'') de la partie d'extrémité avant (2a) ;
(b) au moins une partie centrale (31) de la partie d'extrémité avant (2a) du mandrin formant noyau (2) étant faite en un métal ayant une conductivité thermique élevée, tel que du cuivre, de l'argent ou un alliage.

8. Dispositif selon la revendication 7, caractérisé en ce que le détecteur thermique (30, 30a) est relié en permanence à un dispositif d'impression ou d'enregistrement graphique à long terme pour l'impression ou le traçage de la température (T) en fonction du temps (t) pendant le moulage des préformes (20).

9. Dispositif selon la revendication 7 ou 8, comportant une unité d'évaluation, recevant les données de température provenant dudit détecteur thermique (30, 30a) afin de détecter des crêtes (40a, 40b) des données de température en fonction du temps, les intervalles de temps entre lesdites crêtes (40a, 40b) et le nombre de crêtes pour un processus de moulage d'une préforme, et comportant une unité de comparaison servant à comparer les données de température à des données de référence, contenues dans l'unité d'évaluation.

10. Procédé de fabrication d'une préforme en matière plastique, dans lequel sont séquentiellement injectées, par l'intermédiaire d'un orifice d'injection (12), au moins trois coulées de matières thermoplastiques (8, 9, 10 ; A, B, A), dans un espace annulaire cylindrique creux (1) comportant un volume d'espace annulaire entre un mandrin formant noyau (2 ; 2a, 2b) et la paroi interne d'un moule extérieur (11) et la zone ayant la plus petite épaisseur (d₁) de la couche de matière plastique (6a), voisine de la surface externe du mandrin formant noyau (2 ; 2a, 2b), étant déplacée à distance de l'axe central (100) du mandrin formant noyau (2) pour constituer une zone de forme annulaire autour de l'axe central (100), *caractérisé en ce* qu'une fenêtre d'utilisation de volumes des coulées de matières thermoplastiques (A, B, A) séquentiellement injectées, est définie afin d'assurer la compatibilité, avec des aliments, d'un récipient moulé à partir de ladite préforme en matière plastique ;
la fenêtre d'utilisation comprenant l'injection d'un premier volume de matière vierge (A), non inférieur à 45 % dudit volume d'espace annulaire, avant l'injection d'un premier volume de matière recyclée (B), représentant sensiblement 25 % dudit volume d'espace annulaire et ensuite l'injection d'un second volume de matière vierge (A), non inférieur à 15 % dudit volume d'espace annulaire.
